# DEMANDE DE BREVET EUROPEEN

(11) **EP 0 534 877 A1**
(43) Date de publication de la demande: **31.03.1993**
(21) Numéro de dépôt: 92430021.3
(22) Date de dépôt: 23.09.1992
(51) Int. Cl.: B65D 39/04, B65D 43/08

(54) **Dispositif de protection de pièces circulaires industrielles**

(30) Priorité: 27.09.1991 FR 9112201
(71) Demandeur: Mersch, Patrick, F-13007 Marseille (FR)
(72) Inventeur: Mersch, Patrick, F-13007 Marseille (FR)
(74) Mandataire: Moretti, René

(57) **Abrégé**

La présente invention a pour objet un dispositif de protection de pièces circulaires industrielles, adoptant la forme d'un capuchon/bouchon pour recouvrir ladite pièce ou pénétrer à l'intérieur de son orifice (6b), caractérisé en ce qu'il comporte en outre une jupe (3) comportant des crampons (4) répartis sur une zone déformable périphérique (3f) de la jupe, pour passer d'une position longitudinale sensiblement parallèle à l'axe XX₁ de la jupe et de ladite pièce, lors de la mise en place du dispositif sur celle-ci, à une position sensiblement radiale de blocage/verrouillage desdits crampons (4) par déformation de ladite zone (3f) pour le fixer sur ladite pièce.

Trouve son application pour la protection des brides, extrémités de tubes évasés ou non ou filetés.

## Description

La présente invention a pour objet un dispositif de protection de pièces circulaires industrielles.

Le secteur technique de l'invention est celui des capots, capuchons ou chapeaux de protection de pièces circulaires, telles que des brides de robinetterie, les extrémités de tubes évasées, embouts de tubes et similaires...

Pour la protection de telles pièces, on connaît actuellement deux sortes de protecteurs : ceux qui adoptent le principe d'un bouchon et comportent un voile de protection de la face d'extrémité de la pièce, associé à un bouchon cylindrique comportant des ailes souples périphériques et qui est enfoncé en force dans l'orifice de la pièce.

De tels bouchons donnent généralement satisfaction dans le cas des pièces les plus courantes, mais il a été constaté que leur maintien en position sur ladite pièce était toutefois précaire dans le cas de pièces dont l'orifice interne a fait l'objet d'un revêtement de surface à fort coefficient de glissement, tel que des produits à base de silicone ou de tétrafluoréthylène. Dans un tel cas, un phénomène de rejet du bouchon se produit.

Par ailleurs, le moule de fabrication d'un tel bouchon est d'une mise en oeuvre onéreuse du fait de la conception même du bouchon.

On connaît également d'autres protecteurs qui adoptent le principe d'un capuchon pour envelopper la pièce à protéger. De tels capuchons comportent généralement, à l'extrémité inférieure de leur jupe de protection, un rétreint interne formant une nervure annulaire comportant une entrée évasée.

La mise en place de ces capuchons se fait en force, ladite nervure se plaçant alors à proximité et au-dessous de la proéminence de la pièce (bride ou embout évasé par exemple), ce qui assure le maintien du capuchon sur la pièce.

Certains de ces capuchons entraînent des difficultés lors de leur retrait de ladite pièce.

De plus et comme ceux adoptant le principe du bouchon cité cidessus, leur mise en oeuvre implique l'usage d'un moule d'une conception onéreuse, du fait de l'extrémité "fermée" du capuchon à contre-dépouille.

La présente invention vise à apporter une solution nouvelle dans la protection de telles pièces circulaires industrielles.

Un objectif de l'invention est de réaliser la protection desdites pièces au moyen de protecteurs adoptant le principe d'un bouchon ou d'un capuchon, en les équipant de moyens articulés facilitant leur mise en place sur les objets à protéger et leur retrait desdits objets.

Un autre objectif de l'invention est de simplifier la réalisation du moule de fabrication exempt de toute contre-dépouille et pouvant s'ouvrir sur un seul plan.

Ces objectifs sont atteints par le dispositif de protection selon l'invention, de pièces circulaires industrielles adoptant la forme d'une bride à fixer aux extrémités d'un tube ou au droit des orifices d'entrée et de sortie d'une vanne ou similaire, ou d'un embout évasé à rapporter sur un tube ou d'un tube à extrémité évasée ou filetée ou autre pièce similaire, lequel dispositif est réalisé en matière plastique et adopte la forme d'un capuchon et/ou d'un bouchon pour recouvrir ladite pièce ou pénétrer à l'intérieur de son orifice et comporte des moyens de fixation à ladite pièce mais qui autorisent son retrait, caractérisé en ce qu'il comporte en outre une jupe s'étendant parallèlement à la périphérie externe et/ou interne de ladite pièce, laquelle jupe comporte des crampons répartis sur une zone déformable périphérique de la jupe, pour passer d'une position longitudinale sensiblement parallèle à l'axe longitudinal de la jupe et de ladite pièce en vue de la mise en place du dispositif sur celleci, à une position sensiblement radiale de blocage/verrouillage desdits crampons, par déformation de ladite zone, pour le fixer sur ladite pièce.

Dans un mode de réalisation, où ledit dispositif se présente sous la forme d'un bouchon pour pénétrer dans l'orifice de ladite pièce, ledit dispositif comporte une paroi annulaire de protection de la face d'extrémité de ladite pièce et une jupe coaxiale s'étendant sensiblement perpendiculairement à l'extérieur de ladite paroi annulaire, laquelle jupe comporte une première paroi cylindrique raccordée à l'orifice interne de ladite paroi annulaire, laquelle paroi cylindrique est, en position montée de la pièce, rapprochée et sensiblement parallèle à la face interne dudit orifice et une seconde paroi cylindrique située à l'intérieur de ladite première paroi et sensiblement parallèle et coaxiale à celle-ci, laquelle seconde paroi cylindrique est fermée à sa partie située à l'extérieur du dispositif pour former un bouton-poussoir émergeant au centre de ladite paroi annulaire et à l'opposé de la jupe, lesquelles parois cylindriques sont reliées l'une à l'autre par une zone annulaire déformable sur laquelle sont répartis lesdits crampons, de telle sorte que, sous une poussée exercée sur le bouton, les crampons initialement en position longitudinale de pénétration du bouchon dans ledit orifice sont, par déplacement relatif desdites parois cylindriques le long de leur axe et déformation par déroulage de ladite zone, projetés vers la paroi de l'orifice et mis en position radiale de blocage/verrouillage en appui sur la paroi interne dudit orifice.

Dans un autre mode de réalisation où ledit dispositif de protection se présente sous la forme d'un capuchon, comportant une paroi circulaire de protection de la face d'extrémité de la pièce et une jupe extérieure perpendiculaire et reliée au bord périphérique de ladite paroi pour se placer sensiblement parallèlement au bord périphérique de ladite pièce, ladite jupe comporte une zone annulaire déformable parallèle au bord d'extrémité de la jupe, lequel bord, en position de mise en place du capuchon, est replié vers l'extérieur dans une position sensiblement parallèle à la jupe et les crampons sont répartis sur ladite zone et, en position initiale de mise en place du capuchon, s'étendent longitudinalement et sensiblement parallèlement à la jupe, de telle sorte qu'en rabattant ledit bord d'extrémité de la jupe, lesdits crampons sont pivotés à l'intérieur de celle-ci : de leur position initiale sensiblement parallèle à la jupe, à une position sensiblement radiale de blocage/verrouillage pour se placer à proximité du bord périphérique de ladite pièce.

Les applications de l'invention sont et non limitativement, la protection de la face et du bord des brides de robinetterie, des tubes à embout tulipé/évasé, ou fileté, ou des extrémités de tubes évasées ou filetées.

Dans le mode d'exécution où ledit dispositif adopte le principe d'un bouchon, le bouton de manoeuvre du changement d'orientation des crampons offre l'avantage accessoire de constituer un repère visuel : bouchon sorti = bouchon non verrouillé, bouton enfoncé = bouchon verrouillé.

Dans le mode d'exécution où le dispositif adopte la forme d'un capuchon, la position du bord de la jupe donne l'indication de la position des crampons :
- bord de jupe replié-crampons apparents = non verrouillé,
- bord de jupe rabattu = verrouillé.

Les avantages du dispositif protecteur, dans ses deux formes de réalisation, résident d'une part au plan de son utilisation, une mise en place sur la pièce à protéger et un retrait facilités, au plan de sa fabrication, la possibilité de mettre en oeuvre un moule ne comportant pas de contre-dépouille, donc peu onéreux et corrélativement l'abaissement du prix de revient de tels protecteurs.

D'autres avantages et les caractéristiques de l'invention ressortiront encore à la lecture de la description suivante du dispositif de protection dans deux formes d'exécution non limitatives et en référence aux dessins annexés sur lesquels :
- la figure 1 est une demi-vue extérieure/demi-vue en coupe d'un dispositif protecteur en forme de bouchon, dont les crampons sont en position de mise en place du bouchon sur l'objet à protéger ;
- la figure 2 est une demi-vue extérieure/demi-vue en coupe du bouchon de la figure 1, dont les crampons sont en position de blocage/verrouillage ;

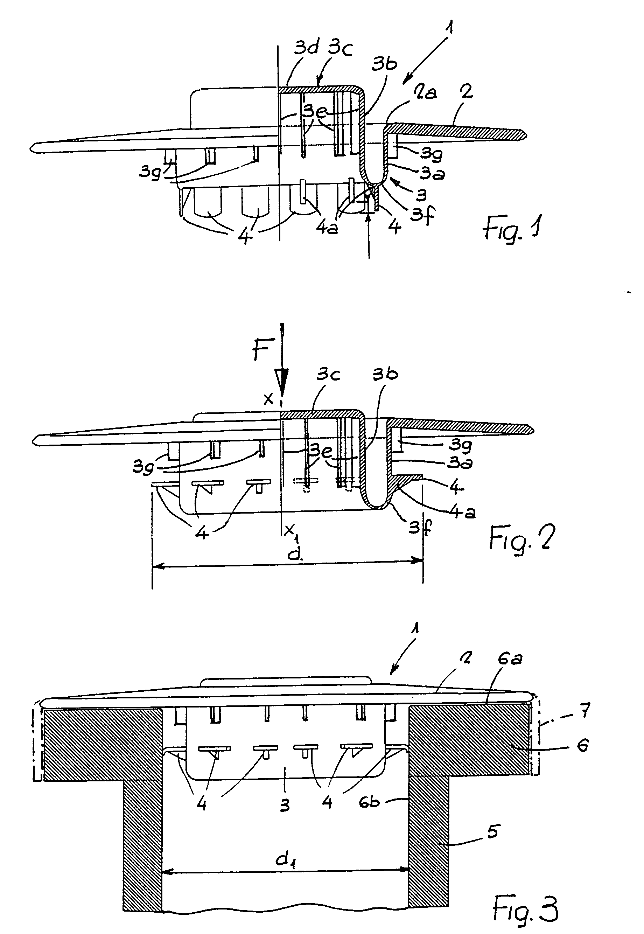

- la figure 2 est une vue en coupe d'une pièce comportant une bride et sur laquelle est représenté le bouchon des figures précédentes en position de blocage/verrouillage ;

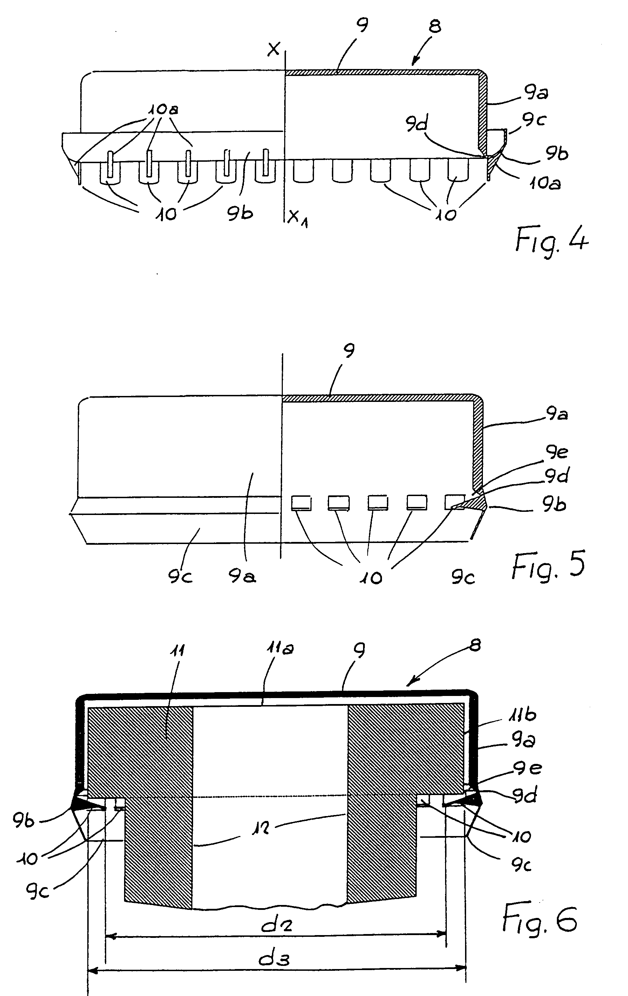

- la figure 4 est une demi-vue extérieure/demi-vue en coupe d'un dispositif protecteur en forme de capuchon, dont les crampons sont en position de mise en place du capuchon sur la pièce à protéger ;
- la figure 5 est une demi-vue extérieure/demi-vue en coupe du capuchon de la figure 4, dont les crampons sont en position de blocage/verrouillage ;
- la figure 6 est une vue en coupe d'une pièce comportant une bride et sur laquelle est représenté le capuchon des figures 4 et 5 en position de blocage/verrouillage.

On se reporte d'abord aux figures 1 à 3.

Dans le mode d'exécution où le dispositif protecteur adopte le principe d'un bouchon 1, celui-ci comporte une paroi annulaire 2 en forme de coupelle, tel qu'illustré aux figures 1 et 2, ou pouvant être plane. Ladite paroi se prolonge sur un côté, par exemple celui formant une légère cavité, par une jupe 3 comportant une première paroi cylindrique de moindre épaisseur 3a, raccordée à l'orifice interne 2a de la paroi annulaire 2, et une seconde paroi cylindrique 3b située à l'intérieur de ladite première paroi 3a, laquelle paroi intérieure 3b est fermée par une paroi de fond 3c, l'ensemble 3b/3c formant un bouton-poussoir 3d.

Lesdites parois cylindriques 3a/3b sont sensiblement coaxiales et ainsi le bouton 3d est sensiblement coaxial et perpendiculaire à la paroi annulaire 2.

Ledit bouton 3d s'étend à l'extérieur de la paroi annulaire 2, en opposition à la partie de jupe 3a et comporte des moyens raidisseurs constitués par exemple par des nervures radiales internes 3e, réservées le long des génératrices de la paroi 3b et aboutissant sur la face interne de la paroi de fond 3c.

Lesdites parois cylindriques 3a/3b sont reliées l'une à l'autre en formant une onde constituant une zone annulaire déformable 3f, la déformation découlant de la nature même du matériau à partir duquel est réalisé le protecteur. Ce matériau est choisi dans la famille des thermoplastiques et est par exemple du polyéthylène ou similaire.

La zone déformable 3f est constituée par une partie de paroi et est délimitée par lesdites nervures radiales 3e et également par d'autres moyens raidisseurs adoptant également la forme de nervures radiales 3g, réparties à la périphérie externe de ladite première paroi cylindrique 3a de la jupe. Les nervures 3g aboutissent à la paroi annulaire 2 et sont d'une hauteur inférieure à la longueur des crampons 4, de sorte qu'un espace e₁ est réservé pour autoriser la mise en place du bouchon sur la pièce à protéger.

Lesdits moyens raidisseurs pourraient toutefois adopter toute autre forme et par exemple être constitués par l'accroissement de l'épaisseur de la paroi cylindrique 3b, à partir de la zone déformable 3f, jusqu'au sommet du bouton et de la paroi cylindrique 3a : de la zone 3f jusqu'à la paroi annulaire 2.

Ainsi, la partie de la jupe 3 qui constitue la zone de déformation annulaire 3f s'étend de l'extrémité libre des nervures 3e à l'extrémité libre des nervures 3g et comporte plusieurs crampons 4 régulièrement répartis sur la périphérie de ladite zone annulaire.

En position de pénétration du bouchon dans l'orifice de la pièce à protéger, lesdits crampons s'étendent sensiblement à partir du milieu de ladite zone Cf et parallèlement auxdites parois cylindriques 3a/3b, tel que cela est illustré à la figure 1. Pour permettre la mise en place dudit bouchon, les crampons 4 pourraient être au plus dans le prolongement de la paroi cylindrique extérieure 3a.

Lesdits crampons 4 peuvent être de toutes formes. Par exemple, ils adoptent la forme de languettes planes raidies par les nervures triangulaires 4a, reliées à la jupe et situées à l'intérieur du bouchon.

Un espace e est réservé entre l'extrémité libre des crampons 4 et lesdites nervures 4a pour permettre la déformation desdits crampons lors du blocage du bouchon mis en position dans l'orifice de la pièce (figure 3).

En exerçant une poussée sur le bouton 3d, on provoque par "déroulage" de la partie de jupe 3f, la projection desdits crampons 4 par déformation de la zone 3f et déplacement relatif des parois cylindriques 3a/3b le long de leur axe longitudinal commun XX₁ (figure 2).

La longueur de déformation de la partie de paroi Cf est définie de telle sorte qu'en fin de poussée du bouton-poussoir 3d, les crampons 4 s'immobilisent dans une position radiale de blocage/verrouillage sensiblement parallèle à la paroi annulaire de protection 2.

Dans cette position, l'extrémité du bouton-poussoir dépasse légèrement la paroi annulaire 2.

La figure 3 représente un bouchon protecteur 1 mis en place à l'extrémité d'un tube 5, auquel est fixée une bride 6 par exemple par soudage.

La paroi annulaire 2 masque, en vue de sa protection, la face 6a de ladite bride 6. La fixation du bouchon est réalisée par blocage/verrouillage au moyen des crampons 4 qui, mis en appui forcé sur la face interne 6b de la bride, ont leur extrémité 4b légèrement déformée et bloquent et verrouillent le bouchon 1 sur la pièce 6 par effet de ressort.

Pour obtenir ce résultat, le diamètre extérieur qui délimite les crampons en position radiale est sensiblement supérieur au diamètre d₁ de l'orifice interne de la bride 6.

On notera que la fixation du bouchon pourra également être réalisée par projection radiale des crampons 4, tel que décrit ci-dessus, mais en plaçant leur extrémité 4a soit dans une rainure, une encoche ou un élargissement conique réservé dans l'orifice de la pièce à protéger, ou encore sur la face arrière d'une bride ou d'un épaulement de ladite pièce.

La figure 1 représente le bouchon tel qu'il est obtenu par moulage.

Dans une variante d'exécution, ledit bouchon 1 peut comporter une seconde jupe périphérique 7, dont une illustration schématique, en traits mixtes, est donnée à la figure 3.

Cette jupe 7 assure la protection du bord 6c de la bride. Elle est sensiblement perpendiculaire à la paroi annulaire 2 et s'étend sensiblement parallèlement à la périphérie du bord 6c de la bride en le recouvrant.

On se reporte maintenant aux figures 4 à 6.

Dans le mode d'exécution où le dispositif protecteur adopte la forme d'un capuchon 8, celui-ci comporte une paroi circulaire 9 pour protéger la face d'extrémité de la pièce à protéger, par exemple une bride, tel que représenté à la figure 6, laquelle paroi circulaire 9 se prolonge à sa périphérie par une jupe 9a sensiblement perpendiculaire à ladite paroi circulaire 9.

La jupe a a pour fonction de protéger le bord périphérique de ladite pièce, par exemple la bride de ladite figure 6, et se place ainsi sensiblement parallèlement audit bord.

Ladite jupe 9a comporte une zone annulaire déformable 9b, parallèle à son bord d'extrémité 9c, lequel est, dans la position de mise en place du capuchon, retourné à l'extérieur de celui-ci.

La zone déformable 9b s'étend du bord 9c jusqu'à une ligne de pliure 9d qui, par voie de conséquence, est elle-même parallèle audit bord 9c.

Ladite zone annulaire 9b comporte une pluralité de crampons 10 régulièrement répartis sur la périphérie de ladite zone.

Dans la position de mise en place du capuchon sur la pièce à protéger, lesdits crampons 10 s'étendent à partir de ladite ligne de pliure 9d et sur le côté de celle-ci, sensiblement parallèlement à la jupe 9a, tel que cela est représenté à la figure 4.

Pour autoriser la mise en place du capuchon, les crampons 10 pourraient être au plus dans le prolongement de ladite jupe 9a.

Lesdits crampons 10, comme ceux 4 du bouchon précédemment décrit, peuvent adopter toute forme. Selon le mode de réalisation illustré au dessin, ils se présentent par exemple sous la forme de languettes planes raidies par des nervures triangulaires 10a reliées à la zone déformable 9b.

La ligne de pliure 9d est obtenue par réduction de l'épaisseur de la paroi de la jupe 9a qui, en position rabattue des crampons 10, constitue le fond d'une rainure périphérique interne d'une section droite triangulaire 9e (figures 5 et 6).

En rabattant le bord périphérique 9c, on provoque, par déformation de la zone annulaire 9b et pliage autour de la ligne 9d, l'articulation des crampons 10 et leur projection à l'intérieur du capuchon, lesquels crampons sont alors dans une position sensiblement radiale et convergent vers le centre du capuchon (figure 5).

La figure 6 représente le capuchon protecteur 8 en position bloquée/verrouillée et enveloppant une bride 11 fixée à un tube 12, par exemple par soudage, en vue de protéger à la fois la face usinée 11a de la bride et son bord périphérique 11b.

Dans leur position radiale, les crampons 10 constituent une pluralité de butées qui s'opposent au retrait du capuchon. Pour obtenir ce résultat, le diamètre interne d₂ qui délimite les crampons 10 en position radiale, est nettement inférieur au diamètre externe d₃ de la bride.

Pour enlever le capuchon 8, on replie le bord 9c autour de la ligne de pliure 9d, pour mettre le crampons 10 dans leur position sensiblement parallèle à la jupe 9a, tel qu'illustré à la figure 4, laquelle représente par ailleurs le capuchon tel qu'il est obtenu par moulage.

On précise que la fixation du capuchon 8 sur la pièce à protéger pourra également être réalisée par projection radiale des crampons 10 par serrage sur le bord extérieur de la pièce ou encore en plaçant leur extrémité 10b dans une rainure ou une encoche.

Bien entendu, sans sortir du cadre de l'invention, les parties qui viennent d'être décrites à titre d'exemple, pourront être remplacées par l'homme du métier par des parties équivalentes remplissant la même fonction, par exemple dans la version de l'invention sous la forme d'un bouchon 1, la projection des crampons 4 pourra être opérée de façon équivalente par la création de deux lignes de moindre résistance encadrant lesdits crampons et constituant deux charnières d'articulation.

## Revendications

1. Dispositif de protection de pièces circulaires industrielles (6/11) adoptant la forme d'une bride à fixer aux extrémités d'un tube ou au droit des orifices d'entrée et de sortie d'une vanne ou similaire, ou d'un embout évasé à rapporter sur un tube ou d'un tube à extrémité évasée ou filetée ou autre pièce similaire, lequel dispositif est réalisé en matière plastique et adopte la forme d'un capuchon (8) et/ou d'un bouchon (1) pour recouvrir ladite pièce (11) ou pénétrer à l'intérieur de son orifice (6b) et comporte des moyens de fixation à ladite pièce mais qui autorisent son retrait, lequel dispositif comporte en outre une jupe (3/9a) s'étendant parallèlement à la périphérie externe et/ou interne de ladite pièce, caractérisé en ce que ladite jupe (3/9a) comporte des crampons (4/10) répartis sur une zone déformable périphérique (3f/9d) de la jupe, pour passer d'une position longitudinale sensiblement parallèle à l'axe longitudinal (XXI) de la jupe et de ladite pièce en vue de la mise en place du dispositif sur celle-ci, à une position sensiblement radiale de blocage/verrouillage desdits crampons (4/10) par déformation de ladite zone (3f/9b) pour le fixer sur ladite pièce.

2. Dispositif selon la revendication 1, lequel se présente sous la forme d'un bouchon (1) pour pénétrer dans l'orifice (6b) de ladite pièce (6), et comportant une paroi annulaire (2) de protection de la face d'extrémité (6a) de ladite pièce (6) et une jupe coaxiale (3) s'étendant sensiblement perpendiculairement à l'extérieur de ladite paroi annulaire, laquelle jupe comporte une première paroi cylindrique (3a) raccordée à l'orifice interne (2a) de ladite paroi annulaire (2), laquelle paroi cylindrique est, en position montée sur la pièce (6) rapprochée et sensiblement parallèle à la face interne dudit orifice (6b), caractérisé en ce que ladite jupe comporte en outre une seconde paroi cylindrique (3b) située à l'intérieur de ladite première paroi (3a) et sensiblement parallèle et coaxiale à celle-ci, laquelle seconde paroi cylindrique (3b) est fermée à sa partie (3d) située à l'extérieur du dispositif pour former un bouton-poussoir (3c) émergeant au centre de ladite paroi annulaire (2) et à l'opposé de la jupe (3), lesquelles parois cylindriques (3a/3b) sont reliées l'une à l'autre par une zone annulaire déformable (3f) sur laquelle sont répartis lesdits crampons (4), de telle sorte que, sous une poussée (F) exercée sur ledit bouton (3c), les crampons (4) initialement en position longitudinale de pénétration du bouchon dans ledit orifice (6b) sont, par déplacement relatif desdites parois cylindriques (3a/3b) le long de leur axe et déformation par déroulage de ladite zone (3f), projetés vers la paroi de l'orifice (6b) et mis en position radiale de blocage/verrouillage en appui sur la paroi interne dudit orifice (6b).

3. Dispositif selon la revendication 2, caractérisé en ce que la partie de jupe (3) formant ladite zone annulaire déformable (3f) est délimitée par des moyens raidisseurs (3e) liés à la paroi cylindrique (3b) du bouton-poussoir et s'étendant de ladite zone (3f) jusqu'à la paroi (3c) dudit bouton.

4. Dispositif selon la revendication 3, caractérisé en ce que la partie de jupe (3) formant ladite zone annulaire déformable (3f) est délimitée en outre par des moyens raidisseurs (3g) liés à la paroi cylindrique (3a) et s'étendant de la zone (3f) jusqu'à la paroi annulaire (2).

5. Dispositif selon l'une quelconque des revendications 2 à 4, caractérisé en ce qu'en position longitudinale de mise en place du bouchon (1), lesdits crampons (4) sont au plus dans le prolongement de ladite première paroi cylindrique (3a) de la jupe (3).

6. Dispositif selon l'une quelconque des revendications 2 à 5, dont le diamètre extérieur (d) qui délimite les crampons (4) en position radiale de blocage/verrouillage est sensiblement supérieur au diamètre (d₁) dudit orifice (6b), caractérisé en ce que les crampons (4) sont élastiques pour réaliser le blocage du bouchon (1) par effet de ressort.

7. Dispositif selon l'une quelconque des revendications 2 à 6, caractérisé en ce qu'il comporte une seconde jupe (7) s'étendant à la périphérie externe de ladite paroi annulaire (2) et parallèlement à ladite première jupe interne (3) et au bord périphérique de ladite pièce (6) pour protéger ledit bord.

8. Dispositif selon la revendication 1, laquelle se présente sous la forme d'un capuchon (8) pour recouvrir ladite pièce (11) et comportant une paroi circulaire de protection (9) de la face d'extrémité (11a) de la pièce et une jupe extérieure (9a) perpendiculaire et reliée au bord périphérique de ladite paroi (9) pour se placer sensiblement parallèlement au bord périphérique (11b) de ladite pièce, laquelle jupe (9a) comporte une zone annulaire déformable (9b) parallèle au bord d'extrémité (9c) de la jupe, lequel bord, en position de mise en place du capuchon (8) est replié vers l'extérieur dans une position sensiblement parallèle à la jupe (9a), caractérisé en ce que les crampons (10) sont répartis sur ladite zone (9b) et, en position initiale de mise en place du capuchon (8), s'étendent longitudinalement et sensiblement parallèlement à la jupe (9a), de telle sorte qu'en rabattant ledit bord d'extrémité (9c) de la jupe, lesdits crampons (10) sont pivotés à l'intérieur de celle-ci : de leur position initiale sensiblement parallèle à la jupe (9a), à une position sensiblement radiale de blocage/verrouillage pour se placer à proximité du bord périphérique (11b) de ladite pièce (11).

9. Dispositif selon la revendication 8, caractérisé en ce qu'en position longitudinale de mise en place du capuchon (8), lesdits crampons (10) sont au plus dans le prolongement de la jupe (9a).

10. Dispositif selon l'une quelconque des revendications 8 et 9, caractérisé en ce que le diamètre intérieur (d₂) qui délimite les crampons (10) en position radiale de blocage/verrouillage est nettement inférieur au diamètre (d₃) de ladite pièce (11) et en ce que les crampons (10) forment dans cette position autant de butées s'opposant au retrait du capuchon (8).

11. Dispositif selon l'une quelconque des revendications 8 à 10, caractérisé en ce que la jupe (9a) comporte une ligne de pliure de moindre résistance périphérique ( 9d) parallèle au bord d'extrémité (9c) de la jupe, laquelle ligne (9d) est située à la jonction des crampons (10) et de la jupe (9a) et autour de laquelle ligne (9d) lesdits crampons ( 10 ) s'articulent.
